# EUROPÄISCHE PATENTSCHRIFT

(11) **EP 0 492 063 B1**
(45) Veröffentlichungstag und Bekanntmachung des Hinweises auf die Patenterteilung: **26.04.1995**
(21) Anmeldenummer: 91116295.6
(22) Anmeldetag: 25.09.1991
(51) Int. Cl.: F16F 13/00

(54) **Elastisches Gummilager**
Elastic rubber bearing
Coussinet élastique de caoutchouc

(30) Priorität: 24.12.1990 DE 4041837
(43) Veröffentlichungstag der Anmeldung: 01.07.1992
(73) Patentinhaber: Boge GmbH, D-53783 Eitorf (DE)
(72) Erfinder: Brenner, Heinrich, W-5483 Bad Neuenahr/Ahrweiler (DE)

(56) Entgegenhaltungen:
- EP-A- 0 234 966
- EP-A- 0 276 387
- EP-A- 0 322 239
- EP-A- 0 418 671
- DE-A- 3 116 721
- DE-A- 4 034 573
- DE-C- 3 024 090
- FR-A- 2 472 116
- US-A- 2 351 427
- US-A- 4 753 421

## Beschreibung

Die Erfindung bezieht sich auf ein elastisches Gummilager mit mindestens zwei Befestigungsteilen die über mindestens eine Elastomerfeder miteinander verbunden sind, und einer hydraulischen Dämpfungsvorrichtung, bestehend aus zwei hintereinander angeordneten, mit Dämpfungsflüssigkeit gefüllten und über einen Dämpfungskanal miteinander verbundenen Kammern.

Es sind bereits elastische Gummilager bekannt (z.B. DE-PS 30 24 090), bei denen die Befestigungsteile über eine Elastomerfeder miteinander verbunden sind und zusätzlich eine hydraulische Dämpfungsvorrichtung aufweisen. Die Elastomerfeder ist dabei in eine äußere, ein- oder mehrteilige Schubfeder und in eine innere sich über einen Grundkörper am Befestigungsteil abstützende, ringförmige Gummifeder aufgeteilt. Durch diese Ausbildung wird von der inneren ringförmigen Gummifeder nur ein geringer Anteil der Lagerlast aufgenommen, wobei eine wirkungsvolle Dämpfung der niederfrequenten Schwingungen erreicht wird. Nachteilig ist bei einem derartigen Lager, daß in der weichen Schubrichtung keine Dämpfung erfolgen kann, so daß durch die weichen kleinen Federkonstanten der Elastomerfeder große ungedämpfte Bewegungen möglich sind, so daß ein Aufschaukeln bei Resonanz auftreten kann.

Aufgabe der Erfindung ist es, ein elastisches Gummilager so zu verbessern, daß zur Beibehaltung des Abrollkomforts in Schubrichtung eine weiche Kennlinie vorgesehen ist, wobei jedoch Stöße im Gummilager gedämpft, axiale Auslenkungen vermindert und ein Aufschaukeln vermieden wird.

Zur Lösung dieser Aufgabe ist erfindungsgemäß vorgesehen, daß die Elastomerfeder in zwei Achsen jeweils eine bestimmte Schub-Druckkennlinie und in einer dritten Achse eine gegenüber der in Richtung Cy und Cz bekannten Schub-Druck-Kennlinie weichere Schubkennlinie aufweist, und daß parallel zur Elastomerfeder in Richtung der dritten Achse, die hydraulische Dämpfungsvorrichtung angeordnet ist.

Bei dieser Ausbildung ist von Vorteil, daß das Gummilager z.B. als Dachlager ausgebildet sein kann und in Längsrichtung des Kraftfahrzeuges eingebaut wird. Die statische Belastung (Vertikal) und die Seitenbelastung durch Seitenführungskräfte werden durch die straffe Schub-Druckkennlinie der Elastomerfeder in Richtung Cy und Cz aufgenommen. In Richtung der weichen Schubkennlinie Cx der Elastomerfeder wird die Dämpfungsvorrichtung parallel geschaltet. Hierdurch bleibt die weiche Kennlinie der Elastomerfeder in Schubrichtung zur Erzielung des Abrollkomforts erhalten, wogegen auftretende Stöße gedämpft und axiale Auslenkungen vermindert und ein Aufschaukeln vermieden wird.

In Ausgestaltung der Erfindung sind die Kammern in einem der Befestigungsteile angeordnet. Hierdurch läßt sich die Dämpfungsvorrichtung im elastischen Gummilager integrieren, so daß kein besonderer Dämpfer erforderlich ist.

Nach einem weiteren wesentlichen Merkmal ist vorgesehen, daß die Befestigungsteile dachförmig ausgebildet und zwei Elastomerfedern im Winkel zueinander angeordnet sind. Die Dämpfungsvorrichtung läßt sich dabei in vorteilhafter Weise in den freien Raum unterhalb der dachförmigen Schub-Druck-Elastomerfeder anordnen.

In Ausgestaltung der Erfindung ist vorgesehen, daß die Kammern stirnseitig mit kappenartigen, elastischen Membranen verschlossen sind. Die elastischen Membrane sind dabei als Verschlüsse für die Kammern ausgebildet und liegen unter leichter Vorspannung am äußeren Befestigungsteil an und werden von diesem bei jeder Einfederung in Richtung Cx bewegt, so daß durch die Flüssigkeitsverdrängung von der einen in die andere Kammer Dämpfung entsteht.

In Ausgestaltung der Erfindung ist der Dämpfungskanal als Bohrung im Befestigungsteil ausgebildet oder ringförmig um die Mittenachse der Kammer verlaufend angeordnet.

Nach einem weiteren wesentlichen Merkmal ist mindestens eine Kammer mit einer Entkopplungsmembran versehen und/oder parallel zum Dämpfungskanal mindestens ein Bypaßventil angeordnet.

Bevorzugte Ausführungsbeispiele der Erfindung sind in den Zeichnungen schematisch dargestellt.

Es zeigt:
Figur 1 ein elastisches Gummilager in Ansicht
Figur 2 einen Schnitt durch das in Figur 1 dargestellte Gummilager
Figur 3 eine Trennwand zwischen den beiden Kammern im Schnitt als Einzelheit dargestellt.

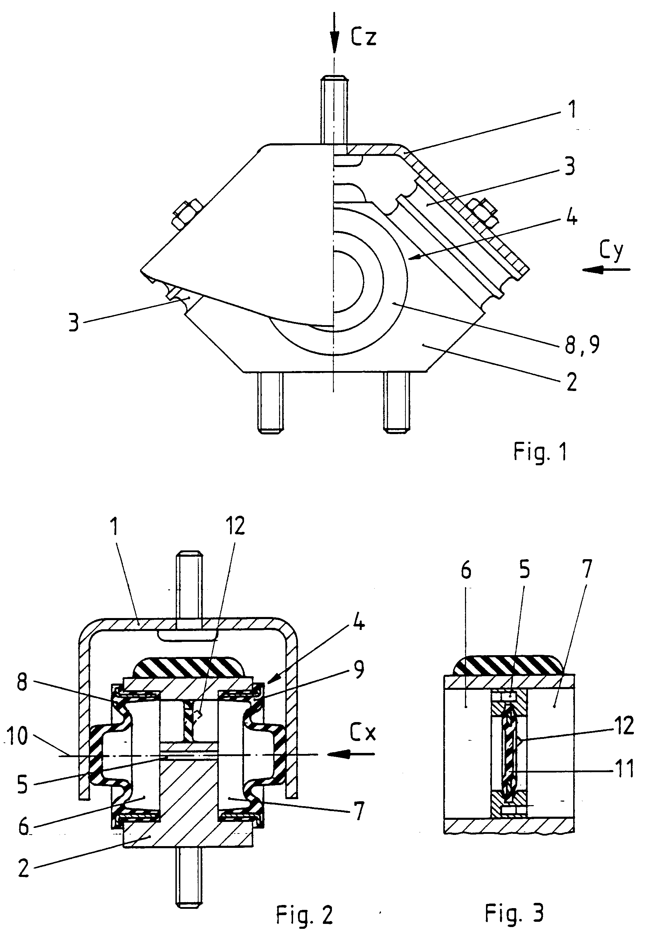

Das in Figur 1 dargestellte elastische Gummilager besteht im wesentlichen aus zwei Befestigungsteilen 1 und 2, die über mindestens eine Elastomerfeder 3 miteinander verbunden sind, wobei im Innenbereich des elastischen Gummilagers eine Dämpfungsvorrichtung 4 angeordnet ist. Das elastische Gummilager weist in Richtung der Achse Cy und Cz eine verhältnismäßig straffe Schub-Druckkennlinie auf. Die Achse Cx verläuft senkrecht zur Zeichenebene.

Aus der Figur 2 ist als Einzelheit die hydraulische Dämpfungsvorrichtung 4 zu entnehmen, wobei im Bereich des Befestigungsteiles 2 die Kammern 6 und 7 angeordnet sind, welche über einen Dämpfungskanal 5 miteinander verbunden sind. Stirnseitig sind die Kammern 6 und 7 durch die kappenartigen Membrane 8 und 9 verschlossen, welche unter leichter Vorspannung am äußeren Befestigungsteil 1 anliegen und bei Einfederung in Richtung Cx eine Strömung im Dämpfungskanal 5 zwischen den Kammern 6 und 7 erzeugen. Hierdurch wird eine relative Bewegung in Richtung Cx des Befestigungsteiles 1 gegenüber dem Befestigungsteil 2 entsprechend gedämpft. Der Dämpfungskanal 5 ist in der Figur 2 als Bohrung im Bereich der Mittenachse 10 ausgebildet und befindet sich direkt im Befestigungsteil 2. Zwischen den Kammern 6 bzw 7 kann neben dem Dämpfungskanal 5 ein Bypassventil 12 vorgesehen werden.

Aus der Figur 3 ist eine weitere Ausführungsform einer Trennwand zwischen den Kammern 6 und 7 zu entnehmen, wobei der Dämpfungskanal 5 als ringförmig um die Mittenachse 10 verlaufender Dämpfungskanal 5 ausgebildet ist. Jeweils eine Eintritts- bzw. Austrittsöffnung verläuft in die Kammer 6 bzw. 7. Im Mittenbereich des den Dämpfungskanal 5 enthaltenen Bauelementes kann zusätzlich eine Entkopplungsmembran 11 und/oder ein Bypaßventil 12 vorgesehen werden.

### Bezugszeichenliste

- 1: - Befestigungsteil
- 2: - Befestigungsteil
- 3: - Elastomerfeder
- 4: - Dämpfungsvorrichtung
- 5: - Dämpfungskanal
- 6: - Kammer
- 7: - Kammer
- 8: - Membran
- 9: - Membran
- 10: - Mittenachse
- 11: - Entkopplungsmembran
- 12: - Bypaßventil

## Patentansprüche

1. Elastisches Gummilager mit mindestens zwei Befestigungsteilen (1, 2), die über mindestens eine Elastomerfeder (3) miteinander verbunden sind und einer hydraulischen Dämpfungsvorrichtung (4), bestehend aus zwei hintereinander angeordneten, mit Dämpfungsflüssigkeit gefüllten und über einen Dämpfungskanal (5) miteinander verbundenen Kammern (6, 7),
dadurch gekennzeichnet,
daß die Elastomerfeder (3) in zwei Achsen (Cy, Cz) jeweils eine bestimmte Schub-Druckkennlinie und in einer dritten Achse (Cx) eine gegenüber der in Richtung Cy und Cz bekannten Schub-Druck-Kennlinie weichere Schubkennlinie aufweist, und daß parallel zur Elastomerfeder (3) in Richtung der dritten Achse (Cx), die hydraulische Dämpfungsvorrichtung (4) angeordnet ist.

2. Gummilager nach Anspruch 1,
dadurch gekennzeichnet,
daß die Kammern (6, 7) in einem der Befestigungsteile (2) angeordnet sind.

3. Gummilager nach Anspruch 1,
dadurch gekennzeichnet,
daß die Befestigungsteile (1, 2) dachförmig ausgebildet und zwei Elastomerfedern (3) im Winkel zueinander angeordnet sind.

4. Gummilager nach Anspruch 1,
dadurch gekennzeichnet,
daß die Kammern (6, 7) stirnseitig mit kappenartigen, elastischen Membranen (8, 9) verschlossen sind.

5. Gummilager nach Anspruch 1,
dadurch gekennzeichnet,
daß der Dämpfungskanal (5) als Bohrung im Befestigungsteil (1) ausgebildet ist.

6. Gummilager nach Anspruch 1,
dadurch gekennzeichnet,
daß der Dämpfungskanal (5) ringförmig um die Mitten-achse (10) der Kammern (6, 7) verläuft.

7. Gummilager nach Anspruch 1,
dadurch gekennzeichnet,
daß mindestens eine Kammer (6, 7) mit einer Entkopplungsmembran (11) versehen ist.

8. Gummilager nach Anspruch 1,
dadurch gekennzeichnet,
daß parallel zum Dämpfungskanal (5) mindestens ein Bypaßventil (12) zwischen den Kammern (6, 7) angeordnet ist.

## Claims

1. Elastic rubber mounting with at least two attachment members (1, 2) which are connected together through at least one elastomeric spring (3) and an hydraulic damping device (4), comprising two chambers (6, 7) arranged in series, filled with damping fluid and connected together through a damping passage (5),
characterised in that,
the elastomeric spring (3) has on two axes (Cy, Cz) a predetermined shear-compression characteristic and has on a third axis (Cx) a softer shear characteristic than the known shear-compression characteristic in the directions Cy and Cz, and that the hydraulic damping device (4) is arranged parallel to the elastomeric spring (3) in the direction of the third axis (Cx).

2. Rubber mounting according to claim 1,
characterised in that
the chambers (6, 7) are arranged in one of the attachment members (2).

3. Rubber mounting according to claim 1,
characterised in that,
the attachment members (1, 2) are made of roof-like shape and two elastomeric springs (3) are arranged at an angle to one another,

4. Rubber mounting according to claim 1,
characterised in that,
the chambers (6, 7) are closed at their faces by cap-shaped elastic membranes (8, 9).

5. Rubber mounting according to claim 1,
characterised in that,
the damping passage (5) is in the form of a bore in the attachment member (1).

6. Rubber mounting according to claim 1,
characterised in that,
the damping passage (5) extends as a ring around the central axis (10) of the chambers (6, 7).

7. Rubber mounting according to claim 1,
characterised in that,
at least one chamber (6, 7) is provided with a de-coupling membrane (11).

8. Rubber mounting according to claim 1,
characterised in that at least one by-pass valve (12) between the chambers (6, 7) is arranged in parallel with the damping passage (5).

## Revendications

1. Bloc de montage en caoutchouc élastique, comportant au moins deux éléments de fixation (1, 2) qui sont reliés l'un à l'autre par au moins un ressort en élastomère (3), et un dispositif d'amortissement (4) hydraulique constitué par deux chambres (6, 7) agencées l'une derrière l'autre, remplies de liquide d'amortissement et reliées l'une à l'autre par l'intermédiaire d'un canal d'amortissement (5), caractérisé en ce que le ressort en élastomère (3) présente suivant chacun de deux axes (Cy, Cz) une caractéristique de course-pression déterminée et dans un troisième axe (Cx) une caractéristique de course plus douce par rapport à la caractéristique de course-pression connue en direction Cy et Cz, et en ce que le dispositif d'amortissement (4) hydraulique est prévu en parallèle par rapport au ressort en élastomère (3) dans la direction du troisième axe (Cx).

2. Bloc de montage en caoutchouc selon la revendication 1, caractérisé en ce que les chambres (6, 7) sont agencées dans l'un des éléments de fixation (2).

3. Bloc de montage en caoutchouc selon la revendication 1, caractérisé en ce que les éléments de fixation (1, 2) sont réalisés sous forme de toit et en ce que deux ressorts en élastomère (3) sont agencés en angle l'un par rapport à l'autre.

4. Bloc de montage en caoutchouc selon la revendication 1, caractérisé en ce que les chambres (6, 7) sont fermées sur leur face frontale par des membranes (8, 9) élastiques en forme de capuchon.

5. Bloc de montage en caoutchouc selon la revendication 1, caractérisé en ce que le canal d'amortissement (5) est réalisé sous la forme d'un perçage dans l'élément de fixation (1).

6. Bloc de montage en caoutchouc selon la revendication 1, caractérisé en ce que le canal d'amortissement (5) est agencé en s'étendant sous forme annulaire autour de l'axe médian (10) des chambres (6, 7).

7. Bloc de montage en caoutchouc selon la revendication 1, caractérisé en ce qu'au moins une chambre (6, 7) est pourvue d'une membrane de découplage (11).

8. Bloc de montage en caoutchouc selon la revendication 1, caractérisé en ce qu'au moins une valve de dérivation (12) est agencée entre les chambres (6, 7), parallèlement au canal d'amortissement (5).
